# EUROPEAN PATENT SPECIFICATION

(11) **EP 2 981 750 B1**
(45) Date of publication and mention of the grant of the patent: **29.04.2020**
(21) Application number: 13807977.7
(22) Date of filing: 13.12.2013
(51) Int. Cl.: F16L 37/23

(54) **ADAPTOR FOR CONNECTORS OF HIGH-PRESSURE HYDRAULIC CIRCUITS**
ADAPTER FÜR VERBINDER VON HYDRAULISCHEN HOCHDRUCKSCHALTUNGEN
ADAPTATEUR POUR CONNECTEURS DE CIRCUITS HYDRAULIQUES SOUS HAUTE PRESSION

(30) Priority: 05.04.2013 IT MI20130523
(43) Date of publication of application: 10.02.2016
(73) Proprietor: Alfa Gomma S.p.A., 20871 Vimercate (Monza Brianza) (IT)
(72) Inventor: GENNASIO, Enrico, I-20871 Vimercate (Monza Brianza) (IT); MAZZOLI, Stefano, I-20883 Mezzago (Monza Brianza) (IT); DOI, Rinaldo, I-26833 Merlino (Lodi) (IT)
(74) Representative: Rapisardi, Mariacristina
(86) International application number: PCT/EP2013/076526
(87) International publication number: WO 2014/161615

(56) References cited:
- WO-A1-2008/130311
- GB-A- 2 310 471
- US-A- 2 983 526
- US-A- 4 098 292
- US-A- 4 373 551

## Description

The present invention relates to an adaptor for connectors of a high-pressure hydraulic circuit.

### Prior Art

It is well known that the lines of high-pressure hydraulic circuits are substantially characterised by linear elements for conveying fluids under pressure and connecting means between said linear elements to ensure flow along the different conveyance and working sections of the entire line.

It is known that said connecting means are traditionally coupled using the definitions of male connector and female connector, based on the substantial and most evident physical characteristics of said connectors; inside said male connectors and female connectors, the shutter element for closing the hydraulic circuit and coupling with the corresponding connector of the adjacent section of the line during opening of the hydraulic circuit can be characterised by different types and geometries, usually classified by international standards. Such a connection is for example known from document US4373551.

It is well known and evident that the coupling between said male connector and said female connector can thus be achieved exclusively if the elements for shutting off and opening the hydraulic line are of congruent types and geometries.

### Limitations of the Prior Art

The presence, in an existing high-pressure hydraulic line, of male connectors and female connectors characterised by said specific type belonging to a standard class traditionally obliges the operator, in the event of improvements and/or maintenance operations which involve new and/or different sections and/or services, to use new male connectors and/or new female connectors of the same type as those present on the existing hydraulic line.

Consequently, the operator must replace said male connectors and said female connectors present on the existing hydraulic line with new connectors of a new type, which are congruent to the new type used for the new sections and/or services.

Such improvements and/or maintenance operations on the existing high-pressure hydraulic line thus impose operational, functional and cost-related limits on the operator, so that there is a felt need to simplify the structure of the connection systems, also those belonging to different types.

### Technical task of the invention

The technical task that the present invention sets itself is to realise an adaptor for connectors of a high-pressure hydraulic circuit comprising a longitudinal hollow body which enables the aforementioned limitations of the prior art to be eliminated.

### Objects of the invention

Within the scope of this technical task, one object of the invention is to realise an adaptor for connectors of a high-pressure hydraulic circuit which enables the connection of new sections and/or services of a hydraulic circuit characterised by connecting means of a given standardised type with sections and/or services of a high-pressure hydraulic circuit characterised by connecting means of a different standardised type.

Another object of the invention is to realise an adaptor for high-pressure hydraulic circuits which makes it possible to invert the connection from a connector of a high-pressure hydraulic circuit having the characteristics of a male connector to a new connector having the characteristics of a female connector belonging to the same type.

Another object of the invention is to realise an adaptor for high-pressure hydraulic circuits which makes it possible to invert the connection from a connector of a high-pressure hydraulic circuit having the characteristics of a female connector to a new connector having the characteristics of a male connector belonging to the same type.

Another object of the invention is to realise an adaptor for hydraulic circuits which makes it possible to invert the connection from a connector of a high-pressure hydraulic circuit having the characteristics of a male connector to a new connector having the characteristics of a female connector belonging to a different type.

Another object of the invention is to realise an adaptor for hydraulic circuits which makes it possible to invert the connection from a connector of a high-pressure hydraulic circuit having the characteristics of a female connector to a new connector having the characteristics of a male connector belonging to a different type.

The technical task, as well as these and other objects, according to the present invention, are achieved by realising an adaptor for connectors of a high-pressure hydraulic circuit comprising a longitudinal hollow body that has a first hollow valve half-body for supporting first connecting means and a second hollow valve half-body supporting second connecting means connecting respective male and/or female connectors installed on said high-pressure hydraulic circuit, characterised in that said first connecting means and said second connecting means share a connection element that is coaxially supported by a flange inside said longitudinal hollow body, there being provided hydraulic sealing means between said first valve half-body and second valve half-body, said first valve half-body and second valve half-body having reciprocal fastening systems for the rigid configuration of said longitudinal hollow body.

The present invention further discloses an adaptor for connectors of a high-pressure hydraulic circuit characterised in that it comprises a longitudinal hollow body which has a first hollow valve half-body coaxially housing a first shutter and a first helical spring compressed so as to dispose said first shutter in a closed position, and a second hollow valve half-body coaxially housing a second shutter and a second helical spring compressed so as to dispose said second shutter in a closed position, there being further provided first locking means for locking said first valve half-body with a first connector congruent thereto installed on said high-pressure hydraulic circuit, second locking means for locking said second valve half-body with a second connector congruent thereto installed on said high-pressure hydraulic circuit, and hydraulic sealing means between said first valve half-body and said second valve half-body, said first valve half-body and second valve half-body further having reciprocal fastening means for the rigid configuration of said longitudinal hollow body.

Other features of the present invention are moreover defined in subsequent claims.

Additional features and advantages of the invention will be more apparent from the description of preferred, but not exclusive, embodiments of the invention, illustrated by way of example and not by way of limitation in the appended figures, in which:
figure 1 shows an axial section of an adaptor according to the invention for connectors of a different type, comprising from left to right, respectively, a male connector of type B and female connector of type A.
figure 2 shows an axial section of an adaptor according to the invention for connectors of a different type, comprising from left to right, respectively, a male connector of type A and female connector of type B.
figure 3 shows an axial section of an adaptor according to the invention for connectors of a different type, comprising from left to right, respectively, a female connector of type A and female connector of type B.
figure 4 shows an axial section of an adaptor according to the invention for connectors of a different type, comprising from left to right, respectively, a male connector of type B and male connector of type A.
figure 5 shows an axial section of an adaptor according to the invention for connectors of the same type, comprising from left to right, respectively, a female connector of type A and female connector of type A.
figure 6 shows an axial section of an adaptor according to the invention for connectors of the same type, comprising from left to right, respectively, a female connector of type B and female connector of type B.
figure 7 shows an axial section of an adaptor according to the invention for connectors of the same type, comprising from left to right, respectively, a female connector of type A and female connector of type A of a different configuration compared to the one illustrated in figure 5.
figure 8 shows an axial section of an adaptor according to the invention for connectors of the same type, comprising from left to right, respectively, a male connector of type A and male connector of type A.
figure 9 shows an axial section of an adaptor according to the invention for connectors of a different type, comprising from left to right, respectively, a male connector of type A and female connector of type B.
figure 10 shows an axial section of an adaptor according to the invention for connectors of a different type, comprising from left to right, respectively, a male connector of type B and female connector of type A.

Hereinafter, by way of example, the wording shutter of type A will indicate a shutter complying with the ISO A standard, and the wording shutter of type B a shutter complying with the FLAT-FACE standard.

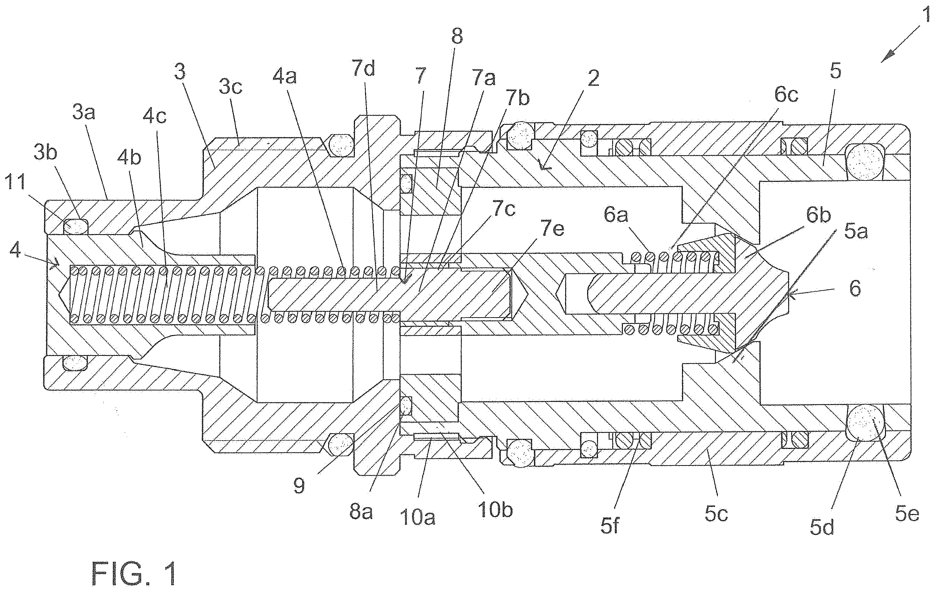

In particular, figure 1 shows an adaptor for connectors of a high-pressure hydraulic circuit (1) consisting of a longitudinal hollow body (2) which has a first male connector comprising a first hollow valve half-body (3) for supporting first coaxial connecting means (4), in this case defined by a shutter of type B having a flat external coupling face.

The longitudinal hollow body (2) further has a second female connector comprising a second hollow valve half-body (5) for supporting second coaxial connecting means (6), in this case defined by a shutter of type A having a truncated cone-shaped external coupling face.

The first connecting means (4) and the second connecting means (6), drawn in a closed position in the figure, are moreover connected to respective shutters of connectors of a congruent type installed on the existing high-pressure hydraulic line and not represented here; the first connecting means (4) will be connected to a female connector with a shutter of type B, and the second connecting means (6) will be connected to a male connector with a shutter of type A, respectively.

The first connecting means (4) and the second connecting means (6) share a coaxial connection element (7), which comprises a central portion (7a) having a thread (7b) engaged with a reverse thread (7c) present in a flange (8) fixed inside the second hollow valve half-body (5).

The coaxial connection element (7) is characterised by a first (7d) and a second (7e) portion extending, respectively, from axially opposite sides relative to said central portion (7a), portions (7d) and (7e) upon which helical contrast springs abut, spring (4a) on portion (7d) and spring (6a) on portion (7e), respectively; these are in turn contrasted in hollow portions (4c) and (6c) inside the respective connecting means (4) and (6).

The action of the spring (4a) forcibly maintains the flange (4b) of the first connecting means (4) against the shoulder (3a) provided in the first valve half-body (3); the sealing of the hydraulic fluid in the closing stage of the connecting means (4) is ensured by the elastic gasket (11) housed in a seat (3b) provided in the first valve half-body (3).

The action of the spring (6a) maintains the circular crown (6b) of the second connecting means (6) against the shoulder (5a) provided in the second valve half-body (5); the sealing of the hydraulic fluid in the closing stage of the connecting means (6) is ensured by the elastic gasket (12) housed in a seat (5b) provided in the second valve half-body (5).

The first valve half-body (3) and the second valve half-body (5) are rigidly connected so as to constitute the longitudinal hollow body (2) of the adaptor (1) by means of a first internal circumferential threaded portion (10a) provided in the first valve half-body (3) and a second external circumferential threaded portion (10b) provided in the second valve half-body (5), said portions being reciprocally engaged.

The hydraulic seal between the first valve half-body (3) and the second valve half-body (5) is ensured by the elastic gasket (9) housed, respectively, in the seat (8a) provided in the flange (8).

The first valve half-body (3) externally has a circumferential threaded portion (3c) for locking, by means of a threaded ring nut, with the congruent female connector of the known type B present on the existing hydraulic circuit, not represented in the figure.

During coupling of the connectors when the first valve half-body (3) is opened, the congruent female shutter of type B brings about an internal backward movement of the first connecting means (4) with a compression on the spring (4a) and passage of the fluid through the cavity of the valve half-body (3).

The second valve half-body (5) externally has a ring nut (5c) that internally has a circumferential perimeter groove (5d), wherein balls (5e) are housed; for locking with the congruent male connector of the known type A present on the existing hydraulic circuit and not represented in the figure; the ring nut (5c) can be activated in opposition and by action of the helical spring (5f), and the balls (5e) are moved so as to engage specific cone-shaped seats of the congruent male connector, thereby ensuring the locking thereof.

During coupling of the connectors when the second valve half-body (5) is opened, the congruent male shutter of type A brings about an internal backward movement of the second connecting means (6) with a compression on the spring (6a) and passage of the fluid through the cavity of the valve half-body (5).

The systems for reciprocally locking the adaptor with the connectors present on the high-pressure hydraulic circuit can be realised with locking systems of a known type, either with a threaded ring nut or a ball nut.

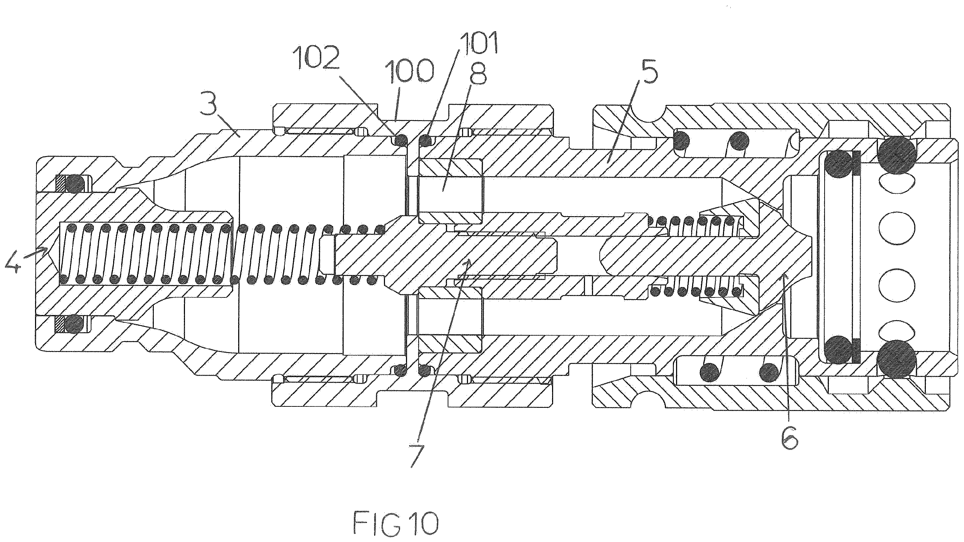

Figure 10 shows an axial section of an adaptor for connectors of a high-pressure hydraulic circuit which has a construction analogous to that of the adaptor illustrated in figure 1, except for the fact that the first and second valve half-body (3, 5) are joined with the interposition of a separate spacer element (100) that is coaxial with the first and second valve half-bodies (3, 5) and has an axial opening for the fluid connection between the first and second half-bodies (3, 5).

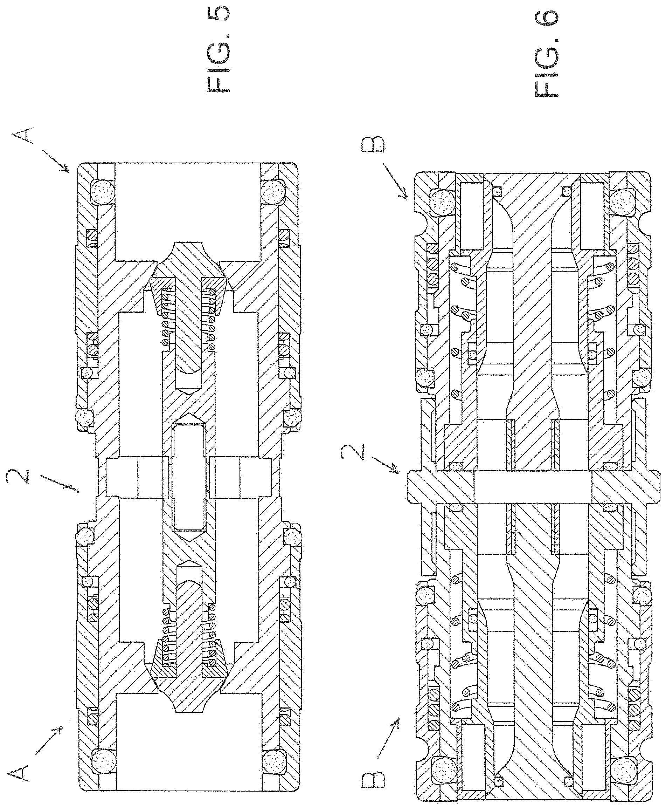

The separate spacer element is also clearly recognizable in the embodiment of figure 6, where the connection element (7) is not envisaged.

In the case of figure 10, the connection element (7) is disposed coaxially through the axial opening of the spacer element (100). Parts equivalent to those of the embodiment illustrated in figure 1 have been indicated with the same numerical reference. The spacer element 100 has a tubular shape and a first internal threaded portion screwed into a corresponding external threaded portion of the hollow valve half-body 3 and a second internal threaded portion screwed into a corresponding external threaded portion of a body 5 (equivalent to the body 5 of figure 1). In this case, the hydraulic seal is not achieved frontally, but rather laterally between the flange 8 and spacer element 100 by means of a first gasket 101, and between the hollow valve half-body 3 and spacer element 100 by means of a second gasket 102.

The rest of the construction of the adaptor will not be described again, since it is analogous, as said, to the one of the adaptor illustrated in figure 1.

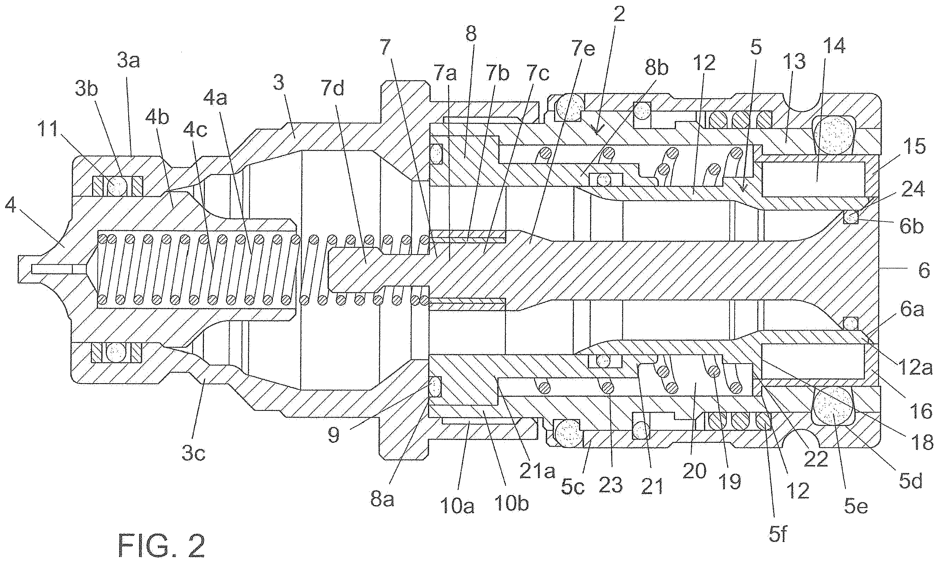

Figure 2 shows an axial section of an adaptor for connectors of a high-pressure hydraulic circuit (1) consisting of a longitudinal hollow body (2) that has a first male connector comprising a first hollow valve half-body (3) for supporting first coaxial connecting means (4), in this case defined by a shutter of type A having a truncated cone-shaped external coupling face.

The longitudinal hollow body (2) has a second female connector comprising a second hollow valve half-body (5) for supporting second coaxial connecting means (6), in this case defined by a shutter of type B having a flat external coupling face.

The first connecting means (4) and the second connecting means (6), drawn in a closed positioned in the figure, are connected to respective connectors of a congruent type installed on the existing high-pressure hydraulic line and not represented here; the first connecting means (4) will be connected to a female connector of type A, and the second connecting means (6) will be connected to a male connector of type B, respectively.

The first connecting means (4) and the second connecting means (6) share a coaxial connection element (7), which comprises a central portion (7a) having a thread (7b) engaged with a reverse thread (7c) present in a flange (8) fixed inside the second hollow valve half-body (5).

The coaxial connection element (7) is characterised by a first (7d) and a second (7e) portion extending, respectively, from axially opposite sides relative to said central portion (7a), portions (7d) and (7e).

A helical contrast spring (4a) abuts on the portion (7d), and is contrasted in a hollow portion (4c) inside the connecting means (4).

The portion (7e) extends axially to form a rigid support rod for the connecting means (6).

The action of the spring (4a) forcibly maintains the flange (4b) of the first connecting means (4) against the shoulder (3a) provided in the first valve half-body (3); the sealing of the hydraulic fluid in the closing stage of the connecting means (4) is ensured by the elastic gasket (11) housed in a seat (3b) provided in the first valve half-body (3).

The second valve half-body (5) internally has at least a first part (8b) directly abutting on the flange (8) and at least a second part (12) which is coaxially movable relative to the first part (8b), both the first part (8b) of the valve half-body (5) and the second part (12) of the valve half-body (5) being mounted coaxially with the support rod (7e) for the connecting means (6).

A longitudinal hollow body (13) for containing the valve body (5) is disposed coaxially with the first part (8b) and second part (12) and defines with the second part (12) an air space (14) in which a sleeve (15) for driving the second part (12) of the valve body (5) is disposed.

The sleeve (15) is oriented coaxially with the valve body (5) and has an internal flange (16) at its head end and an external flange (17) at its base end.

The internal flange (16) of the sleeve (15) is engageable against a shoulder (18) of the second part of the valve body (12) so as to drive it.

The second part (12) of the valve half-body (5) is movable relative to the first part (8b) of the valve half-body in opposition and by action of a first helical spring (19) which is positioned in the air space (20) coaxially with the valve half-body (5) and interposed in particular between an external supporting shoulder (21) of the first part of the valve half-body (8b) and an external supporting shoulder (22) of the second part of the valve half-body (12).

The sleeve (15), on the other hand, is movable relative to the valve half-body (5) by the action and opposition of a second helical spring (23) which is positioned in the air space (20) coaxially with and outside the first helical spring (19) and interposed between the sleeve (15) and the first part of the valve half-body (8b).

More particularly, the second helical spring (23) is positioned between an external supporting shoulder (21a) of the flange (8) solidly joined to the first part of the valve half-body (8b) and an external supporting flange (17) of the sleeve (15).

The action of the first spring (19) forcibly maintains the end (12a) of the second part of the valve half-body (12) against the circumferential coupling (6a) of the connecting means (6); the sealing of the hydraulic fluid in the closing stage of the connecting means (6) is ensured by the elastic gasket (24) housed in a seat (6b) provided in the connecting means (6).

The first valve half-body (3) and the second valve half-body (5) are rigidly connected so as to constitute the longitudinal hollow body (2) of the adaptor (1) by means of a first internal circumferential threaded portion (10a) provided in the first valve half-body (3) and a second external circumferential threaded portion (10b) provided in the second valve half-body (5), the portions being reciprocally engaged.

The hydraulic seal between the first valve half-body (3) and the second valve half-body (5) is ensured by the elastic gasket (9) housed in the seat (8a) provided in the flange (8).

The first valve half-body (3) externally has a circumferential seat (3c) for quick locking with balls in the reciprocal female connector of the known type A present in the existing hydraulic circuit and not represented in the figure.

During coupling of the connectors when the first valve half-body (3) is opened, the congruent female shutter of type A brings about an internal backward movement of the first connecting means (4) with a compression on the spring (4a) and passage of the fluid through the cavity of the valve half-body (3).

The second valve half-body (5) externally has a ring nut (5c) that internally has a circumferential perimeter groove (5d), wherein balls (5e) are housed; for locking with the reciprocal male connector of the known type B present on the existing hydraulic circuit and not represented in the figure the ring nut (5c) can be activated in opposition and by action of the helical spring (5f), and the balls (5e) are moved so as to engage specific cone-shaped seats of the congruent male connector, thereby ensuring the locking thereof.

During coupling of the connectors when the second valve half-body (5) is opened, the congruent male connector of type B brings about a backward movement, via the driving sleeve (15), of the second part of the valve half-body (12) and on the spring (19), with a compression, respectively, on the spring (23) and the passage of the fluid through the cavity of the valve half-body (5).

As said above, the systems for reciprocally locking the adaptor with the connectors present on the high-pressure hydraulic circuit can be realised with locking systems of a known type, either with a threaded ring nut or a ball nut.

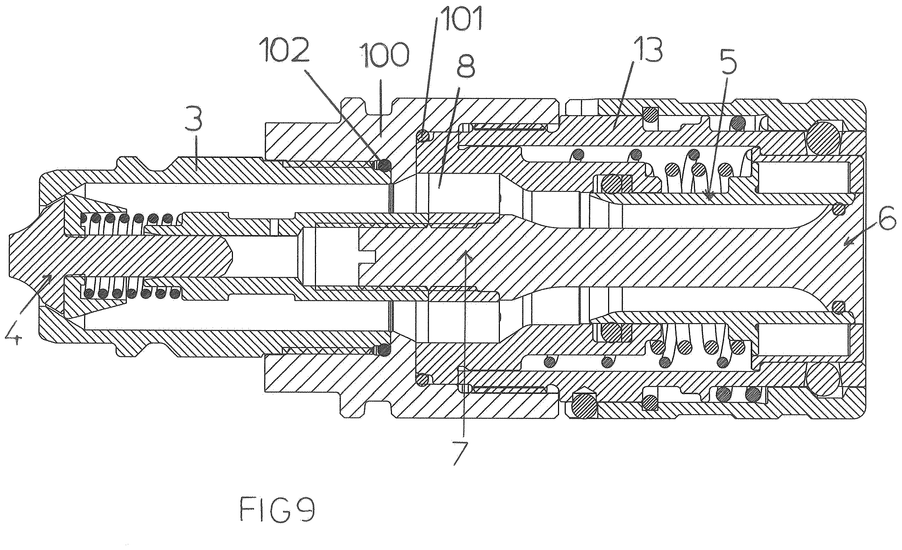

Figure 9 shows an axial section of an adaptor for connectors of a high-pressure hydraulic circuit which has a construction analogous to that of the adaptor illustrated in figure 2, except for the fact that the first and second valve half-body (3, 5) are joined with the interposition of a separate spacer element (100) that is coaxial with the first and second valve half-bodies (3, 5) and has an axial opening for the fluid connection between the first and second half-bodies (3, 5). In this case the first shutter (4) and the second shutter (6) share a connection element (7) that is coaxially supported by a flange (8) inside the longitudinal hollow body. The connection element (7) is disposed coaxially through the axial opening of the spacer element (100). Parts equivalent to those of the embodiment illustrated in figure 2 have been indicated with the same numerical reference. The spacer element 100 has a tubular shape and a first internal threaded portion screwed into a corresponding external threaded portion of the hollow valve half-body 3 and a second internal threaded portion screwed into a corresponding external threaded portion of a body 13 (equivalent to the body 13 of figure 2). In this case, the hydraulic seal is not achieved frontally, but rather laterally between the flange 8 and spacer element 100 by means of a first gasket 101, and between the hollow valve half-body 3 and spacer element 100 by means of a second gasket 102. The rest of the construction of the adaptor will not be described again, since it is analogous, as said, to the one of the adaptor illustrated in figure 2.

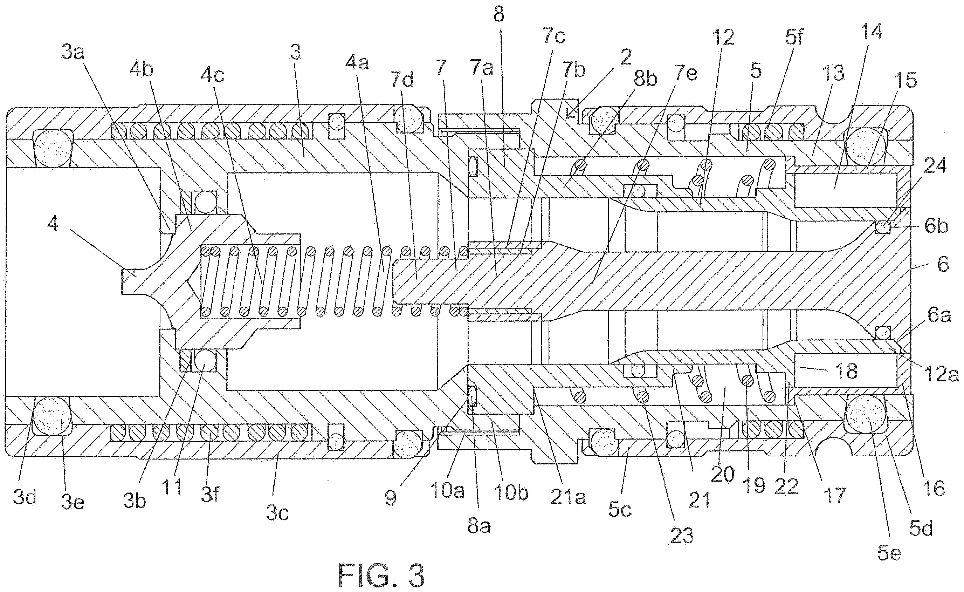

Figure 3 shows an adaptor for connectors of a high-pressure hydraulic circuit (1) consisting of a longitudinal hollow body (2) comprising a first male connector which has a first hollow valve half-body (3) for supporting first coaxial connecting means (4), defined in this case by a shutter of type B having a flat external coupling face.

The longitudinal hollow body (2) further has a second male connector comprising a second hollow valve half-body (5) supporting second coaxial connecting means (6), defined in this case by a shutter of type A having a truncated cone-shaped external coupling face.

The first connecting means (4) and the second connecting means (6), drawn in a closed position in the figure, are moreover connected to respective connectors of a congruent type installed on the existing high-pressure hydraulic line and not represented here; respectively, the first connecting means (4) will be connected to a female connector of type B and the second connecting means (6) will be connected to a female connector of type A, respectively.

The first connecting means (4) and the second connecting means (6) share a coaxial connection element (7), which comprises a central portion (7a) having a thread (7b) engaged with a reverse thread (7c) present in a flange (8) fixed inside the second hollow valve half-body (5).

The coaxial connection element (7) is characterised by a first (7d) and a second (7e) portion extending, respectively, from axially opposite sides relative to said central portion (7a), portions (7d) and (7e), upon which helical contrast springs abut, spring (4a) on portion (7d) and spring (6a) on portion (7e), respectively; these are in turn contrasted in hollow portions (4c) and (6c) inside the respective connecting means (4) and (6).

The action of the spring (4a) forcibly maintains the flange (4b) of the first connecting means (4) against the shoulder (3a) provided in the first valve half-body (3); the sealing of the hydraulic fluid in the closing stage of the connecting means (4) is ensured by the elastic gasket (11) housed in a seat (3b) provided in the first valve half-body (3).

The action of the spring (6a) forcibly maintains the flange (6b) of the second connecting means (6) against the shoulder (5a) provided in the second valve half-body (5); the sealing of the hydraulic fluid in closing stage of the connecting means (6) is ensured by the elastic gasket (12) housed in a seat (5b) provided in the second valve half-body (5).

The first valve half-body (3) and the second valve half-body (5) are rigidly connected so as to constitute the longitudinal hollow body (2) of the adaptor (1) by means of a first internal circumferential threaded portion (10a) provided in the first valve half-body (3) and a second external circumferential threaded portion (10b) provided in the second valve half-body (5), said portions being reciprocally engaged.

The hydraulic seal between the first valve half-body (3) and the second valve half-body (5) is ensured by the elastic gasket (9) housed in the seat (8a) provided in the flange (8).

The first valve half-body (3) externally has a circumferential seat (3c) for quick locking with balls of the reciprocal female connector of the known type B present on the existing hydraulic circuit and not represented in the figure.

During coupling of the connectors when the first valve half-body (3) is opened, the reciprocal female shutter of type B brings about an internal backward movement of the first connecting means (4) with a compression on the spring (4a) and passage of the fluid through the cavity of the valve half-body (3).

The second valve half-body (5) externally has a circumferential seat (5c) for quick locking with balls of the reciprocal female connector of the known type A present on the existing hydraulic circuit and not represented in the figure.

During coupling of the connectors when the second valve half-body (5) is opened, the reciprocal female shutter of type A brings about an internal backward movement of the second connecting means (6) with a compression on the spring (6a) and passage of the fluid through the cavity of the valve half-body (5).

It is again noted that the systems for reciprocally locking the adaptor with the connectors present on the high-pressure hydraulic circuit can be realised with locking systems of a known type, either with a threaded ring nut or a ball nut.

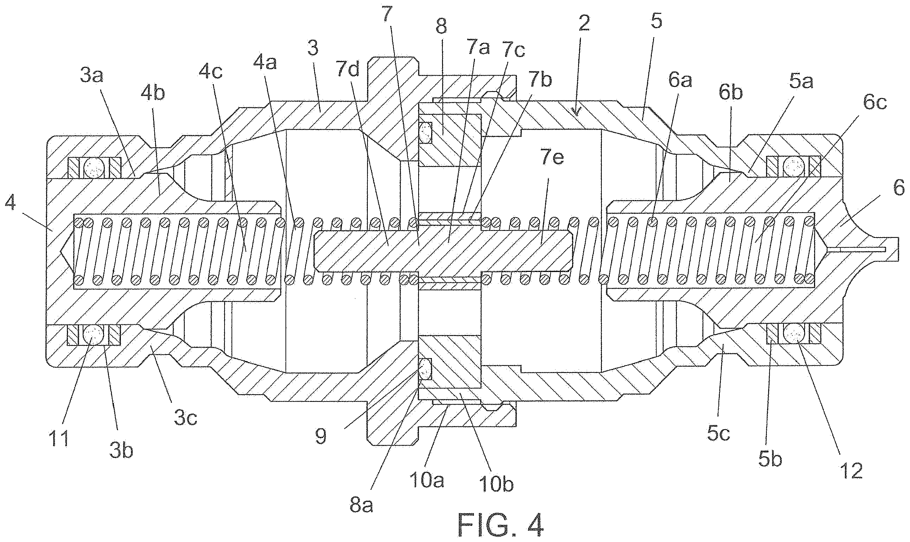

Figure 4 shows an adaptor for connectors of a high-pressure hydraulic circuit (1) consisting of a longitudinal hollow body (2) which has a first female connector comprising a first hollow valve half-body (3) for supporting first coaxial connecting means (4), in this case defined by a shutter of type A having a truncated cone-shaped external coupling face.

The longitudinal hollow body (2) further has a second female connector comprising a second hollow valve half-body (5) for supporting second coaxial connecting means (6), in this case defined by a shutter of type B having a flat external coupling face.

The first connecting means (4) and the second connecting means (6), drawn in a closed position in the figures, are moreover connected to respective connectors of a congruent type installed on the existing high-pressure hydraulic line and not represented here; the first connecting means (4) will be connected to a male connector of type A, and the second connecting means (6) will be connected to a male connector of type B, respectively.

The first connecting means (4) and the second connecting means (6) share a coaxial connection element (7), which comprises a central portion (7a) having a thread (7b) engaged with a reverse thread (7c) present in a flange (8) fixed inside the second hollow valve half-body (5).

The coaxial connection element (7) is characterised by a first (7d) and a second (7e) portion extending, respectively, from axially opposite sides relative to said central portion (7a), portions (7d) and (7e).

Abutting on the portion (7d) there is a helical contrast spring (4a), contrasted in a hollow portion (4c) inside the connecting means (4).

The portion (7e) extends axially to form a rigid support rod for the connecting means (6).

The action of the spring (4a) forcibly maintains the circular crown (4b) of the first connecting means (4) against the shoulder (3a) provided in the first valve half-body (3); the sealing of the hydraulic fluid in the closing stage of the connecting means (4) is ensured by the elastic gasket (11) housed in a seat (3b) provided in the first valve half-body (3).

The second valve half-body (5) internally has at least a first part (8b) directly abutting on the flange (8) and at least a second part (12) which is coaxially movable relative to the first part (8b), both the first part (8b) of the valve half-body (5) and the second part (12) of the valve half-body (5) being mounted coaxially with the support rod (7e) for the connecting means (6).

A longitudinal hollow body (13) for containing the valve body (5) is disposed coaxially with the first part (8b) and second part (12) and defines with the second part (12) an air space (14) in which a sleeve (15) for driving the second part (12) of the valve body (5) is disposed.

The sleeve (15) is oriented coaxially to the valve body (5) and has an internal flange (16) at its head end and an external flange (17) at its base end.

The internal flange (16) of the sleeve (15) is engageable against a shoulder (18) of the second part of the valve body (12) so as to drive it.

The second part (12) of the valve half-body (5) is movable relative to the first part (8b) of the valve half-body in opposition and by action of a first helical spring (19) which is positioned in the air space (20) coaxially with the valve half-body (5) and interposed in particular between an external supporting shoulder (21) of the first part of the valve half-body (8b) and an external supporting shoulder (22) of the second part of the valve half-body (12).

The sleeve (15), on the other hand, is movable relative to the valve half-body (5) by the action and opposition of a second helical spring (23) which is positioned in the air space (20) coaxially with and outside the first helical spring (19) and interposed between the sleeve (15) and the first part of the valve half-body (8b).

More particularly, the second helical spring (23) is positioned between an external supporting shoulder (21a) of the flange (8) solidly joined to the first part of the valve half-body (8b) and an external supporting flange (17) of the sleeve (15).

The action of the first spring (19) forcibly maintains the end (12a) of the second part of the valve half-body (12) against the circumferential coupling (6a) of the connecting means (6); the sealing of the hydraulic fluid in the closing stage of the connecting means (6) is ensured by the elastic gasket (24) housed in a seat (6b) provided in the connecting means (6).

The hydraulic seal between the first valve half-body (3) and the second valve half-body (5) is ensured by the elastic gasket (9) housed in the seat (8a) provided in the flange (8).

The first valve half-body (3) and the second valve half-body (5) are rigidly connected so as to constitute the longitudinal hollow body (2) of the adaptor (1) by means of a first external circumferential threaded portion (10a) provided in the first valve half-body (3) and a second internal circumferential threaded portion (10b) provided in the second valve half-body (5), the portions being reciprocally engaged.

The first valve half-body (3) externally has a ring nut (3c) that internally has a circumferential perimeter groove (3d), wherein balls (3e) are housed; for locking with the reciprocal female connector of the known type A present on the existing hydraulic circuit and not represented in the figure, the ring nut (3c) can be activated in opposition and by action of the helical spring (3f) and the balls (3e) moved so as to engage specific cone-shaped seats of the reciprocal male connector, thereby ensuring the locking thereof.

During coupling of the connectors when the first valve half-body (3) is opened, the reciprocal male shutter of type A brings about an internal backward movement of the first connecting means (4) with a compression on the spring (4a) and passage of the fluid through the cavity of the valve half-body (3).

The second valve half-body (5) externally has a ring nut (5c) that internally has a circumferential perimeter groove (5d), wherein balls (5e) are housed; for locking with the reciprocal male connector of the known type B present on the existing hydraulic circuit and not represented in the figure the ring nut (5c) can be activated in opposition and by action of the helical spring (5f), and the balls (5e) are moved so as to engage specific cone-shaped seats of the reciprocal male connector, thereby ensuring the locking thereof.

During coupling of the connectors when the second valve half-body (5) is opened, the reciprocal male connector of type B brings about a backward movement through the drawing sleeve (15) of the second part of the valve half-body (12) and on the spring (19), with a compression, respectively, on the spring (23) and the passage of the fluid through the cavity of the valve half-body (5).

It will be repeated that the systems for reciprocally locking the adaptor with the connectors present on the high-pressure hydraulic circuit can be realised with locking systems of a known type, either with a threaded ring nut or a ball nut.

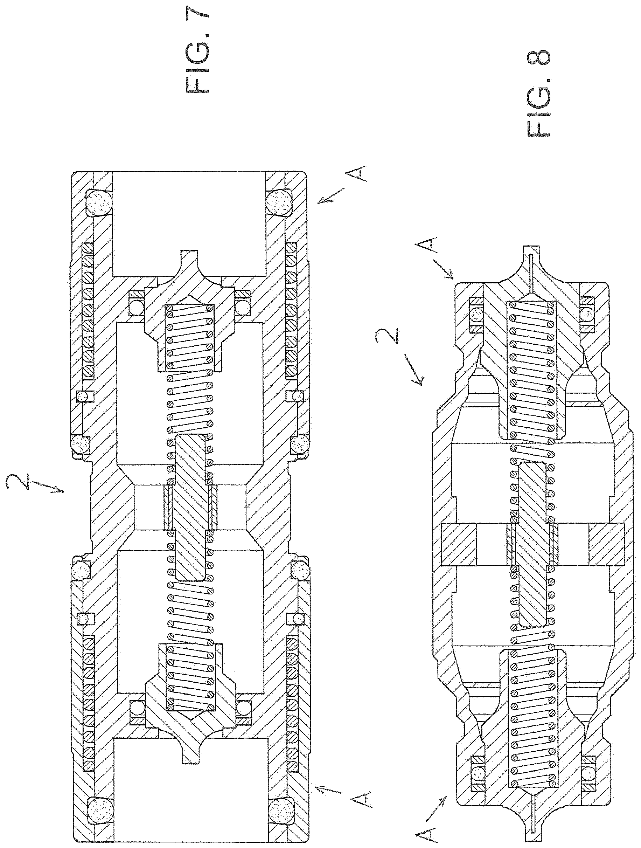

Figures 5, 6, 7, 8 show an adaptor for connections of a high-pressure hydraulic circuit (1) consisting of a longitudinal hollow body (2) for supporting first connecting means (4) and second coaxial connecting means (6) with equivalent characteristics and of an equivalent type, respectively defined in figure 5 by pairs of female connectors with shutters of type A, in figure 6 by pairs of female connectors with shutters of type B, in figure 7 by pairs of female connectors with shutters of type A, and in figure 8 by pairs of male connectors with shutters of type A.

In particular, with regard to what is indicated in figure 5, the type and characterising elements make reference to the second hollow valve half-body (5) shown in figure 1, suitably and symmetrically coupled to a first valve half-body (3) with equivalent characteristics.

With regard to what is indicated in figure 6, the type and characterising elements make reference to the second hollow valve half-body (5) shown in figure 2, suitably and symmetrically coupled to a first valve half-body (3) with equivalent characteristics.

With regard to what is indicated in figure 7 the type and characterising elements make reference to the second hollow valve half-body (5) shown in figure 3, suitably and symmetrically coupled to a first valve half-body (3) with equivalent characteristics.

With regard to what is indicated in figure 8 the type and characterising elements make reference to the hollow valve half-body (3) shown in figure 1, suitably and symmetrically coupled to a second valve half-body (5) with equivalent characteristics.

The functioning of the adaptor for connectors of high-pressure hydraulic circuits (1) according to the invention appears clear from what has been described and illustrated, and in particular it substantially enables the connection of new sections and/or services of a hydraulic circuit characterised by connecting means of a given standardised type with sections and/or services of a high-pressure hydraulic circuit characterised by connecting means of a different standardised type; that is, it enables an inversion of the connection from a male connector to a new female connector of the same type or of different type, from a male connector to a new female connector, and from a female connector to a new male connector, accordingly.

Modifications and variants, beyond the ones already described, are naturally possible.

Practically speaking, it has been verified that an adaptor for connectors of high-pressure hydraulic circuits (1) according to the invention is particularly advantageous in that it has characteristics of modularity which enable simple and effective operations on existing hydraulic circuits, irrespective of the type of connectors installed therein.

An adaptor for connectors of high-pressure hydraulic circuits (1) according to the invention thus conceived is susceptible of numerous modifications and variants. All the details can be replaced by technically equivalent elements.

In practical terms, the materials used, as well as the dimensions and proportions, can be any whatsoever according to need and the state of the art.

## Claims

1. An adapter for connectors of a high-pressure hydraulic circuit (1) comprising first shutting means (4) and second shutting means (6) configured to be coupled to respective male and/or female connectors installed on said high-pressure hydraulic circuit, a longitudinal hollow body (2) that has a first hollow valve half-body (3) for supporting said first shutting means (4) and a second hollow valve half-body (5) supporting said second shutting means (6), wherein said adapter (1) comprises a flange (8), fixed inside the second hollow valve half-body, a connection element (7) shared by said first shutting means (4) and said second shutting means (6) that is coaxially supported by said flange (8) inside said longitudinal hollow body, hydraulic sealing means (9) provided on said flange (8) between said flange and said first valve half-body (3), said first valve half-body (3) and said second valve half-body (5) having reciprocal fastening systems for the rigid configuration of said longitudinal hollow body (2).

2. The adapter for connectors of high-pressure hydraulic circuits (1) according to any preceding claim, **characterised in that** said coaxial connection element (7) comprises a central portion (7a) thereof having a thread (7b) engaged with a reverse thread (7c) present in said flange (8).

3. The adapter for connectors of high-pressure hydraulic circuits (1) according to any preceding claim, **characterised in that** said coaxial connection element (7) comprises a first (7d) and a second (7e) portion extending, respectively, from axially opposite sides relative to said central portion (7a), said first (7d) and said second (7e) portions engaging with said first shutting means (4) and said second shutting means (6), respectively.

4. The adapter for connectors of high-pressure hydraulic circuits (1) according to one or more of the preceding claims, **characterised in that** said first coaxial shutting means (4) comprises a shutter of type A or B of a male or female connector, the external coupling face thereof being of a truncated cone shape or flat, respectively.

5. The adapter for connectors of high-pressure hydraulic circuits (1) according to one or more of the preceding claims, **characterised in that** said first shutting means (4) is connected to a female connector with a shutter of type A or B, respectively, and said second shutting means (6) is connected to a male connector with a shutter of type B or A, respectively.

6. The adapter for connectors of high-pressure hydraulic circuits (1) according to one or more of the preceding claims, **characterised in that** said portions (7d) and (7e) comprise, respectively, helical contrast springs, which are, in turn, contrasted in hollow portions (4c) and (6c) inside the respective shutting means (4) and (6).

7. The adapter for connectors of high-pressure hydraulic circuits (1) according to one or more of the preceding claims, **characterised in that** the sealing of the hydraulic fluid in the closing stage of said shutting means (4) is ensured by an elastic gasket (11, 12) housed in a seat (3b, 5b) provided in said first and second valve half-body (3, 5).

8. The adapter for connectors of high-pressure hydraulic circuits (1) according to one or more of the preceding claims, **characterised in that** said first valve half-body (3) and said second valve half-body (5) are rigidly connected so as to constitute said longitudinal hollow body (2) by means of a first internal circumferential threaded portion (10a) provided in said first valve half-body (3) and a second external circumferential threaded portion (10b) provided in said second valve half-body (5), said portions (10a and 10b) being reciprocally engaged.

9. The adapter for connectors of high-pressure hydraulic circuits (1) according to one or more of the preceding claims, **characterised in that** the hydraulic seal between said first valve half-body (3) and said second valve half-body (5) is ensured by the elastic gasket (9) housed in the seat (8a) provided in said flange (8).

10. The adapter for connectors of high-pressure hydraulic circuits (1) according to one or more of the preceding claims, **characterised in that** said first valve half-body (3) externally has a circumferential threaded portion (3c) for locking, by means of a threaded ring nut, with the reciprocal female connector with a shutter of type B present on the existing hydraulic circuit.

11. The adapter for connectors of high-pressure hydraulic circuits (1) according to one or more of the preceding claims, **characterised in that** said second valve half-body (5) externally has a ring nut (5c) that internally has a circumferential perimeter groove (5d), wherein balls (5e) are housed.

## Patentansprüche

1. Adapter für Verbinder einer hydraulischen Hochdruckschaltung (1), umfassend erste Verschlussmittel (4) und zweite Verschlussmittel (6), die so konfiguriert sind, dass sie mit jeweiligen Steckern und/oder Buchsen gekoppelt werden, die an der hydraulischen Hochdruckschaltung installiert sind, einen Längshohlkörper (2), der einen ersten Hohlventilhalbkörper (3) zum Tragen der ersten Verschlussmittel (4) und einen zweiten Hohlventilhalbkörper (5) zum Tragen der zweiten Verschlussmittel (6), wobei der Adapter (1) einen Flansch (8), der innerhalb des zweiten Hohlventilhalbkörpers fixiert ist, ein Verbindungselement (7), das von den ersten Verschlussmitteln (4) und von den zweiten Verschlussmittel (6) geteilt wird, das von dem Flansch (8) innerhalb des Längshohlkörpers koaxial getragen wird, hydraulische Abdichtungsmittel (9), die an dem Flansch (8) zwischen dem Flansch und dem ersten Ventilhalbkörper (3) versehen sind, umfasst, wobei der erste Ventilhalbkörper (3) und der zweite Ventilhalbkörper (5) wechselseitige Befestigungssystemen für die starre Konfiguration des Längshohlkörpers (2) aufweist.

2. Adapter für Verbinder von hydraulischen Hochdruckschaltungen (1) nach einem vorhergehenden Anspruch, **dadurch gekennzeichnet, dass** das koaxiale Verbindungselement (7) einen zentralen Abschnitt (7a) davon aufweisend ein Gewinde (7b) umfasst, das mit einem in dem Flansch (8) vorhandenen Umkehrgewinde (7c) in Eingriff steht.

3. Adapter für Verbinder von hydraulischen Hochdruckschaltungen (1) nach einem vorhergehenden Anspruch, **dadurch gekennzeichnet, dass** das koaxiale Verbindungselement (7) einen ersten (7d) und einen zweiten (7e) Abschnitt umfasst, die sich jeweils von axial gegenüberliegenden Seiten relativ zum zentralen Abschnitt (7a) erstrecken, wobei der erste (7d) und der zweite (7e) Abschnitt in das erste Verschlussmittel (4) und das zweite Verschlussmittel (6) eingreifen.

4. Adapter für Verbinder von hydraulischen Hochdruckschaltungen (1) nach einem oder mehreren der vorhergehenden Ansprüche, **dadurch gekennzeichnet, dass** das erste koaxiale Verschlussmittel (4) einen Verschluss vom Typ A oder B eines Steckers oder Buchse umfasst, wobei deren äußere Kopplungsfläche jeweils eine Kegelstumpfform bzw. eine flache Form aufweist.

5. Adapter für Verbinder von hydraulischen Hochdruckschaltungen (1) nach einem oder mehreren der vorhergehenden Ansprüche, **dadurch gekennzeichnet, dass** das erste Verschlussmittel (4) jeweils mit einer Buchse mit einem Verschluss vom Typ A bzw. B verbunden ist und das zweite Verschlussmittel (6) mit einem Stecker mit einem Verschluss vom Typ B bzw. A verbunden ist.

6. Adapter für Verbinder von hydraulischen Hochdruckschaltungen (1) nach einem oder mehreren der vorhergehenden Ansprüche, **dadurch gekennzeichnet, dass** die Abschnitte (7d) und (7e) jeweils Schraubenkontrastfedern umfassen, die wiederum in hohlen Abschnitten (4c) und (6c) innerhalb der jeweiligen Verschlussmittel (4) und (6) kontrastiert sind.

7. Adapter für Verbinder von hydraulischen Hochdruckschaltungen (1) nach einem oder mehreren der vorhergehenden Ansprüche, **dadurch gekennzeichnet, dass** die Abdichtung des Hydraulikfluids in der Schließstufe des Verschlussmittels (4) durch eine elastische Dichtung (11, 12) gewährleistet ist, die in einem Sitz (3b, 5b) untergebracht ist, der in dem ersten und zweiten Ventilhalbkörper (3, 5) versehen ist.

8. Adapter für Verbinder von hydraulischen Hochdruckschaltungen (1) nach einem oder mehreren der vorhergehenden Ansprüche, **dadurch gekennzeichnet, dass** der erste Ventilhalbkörper (3) und der zweite Ventilhalbkörper (5) starr miteinander verbunden sind, um den Längshohlkörper (2) mittels eines ersten inneren Umfangsgewindeabschnitts (10a), der in dem ersten Ventilhalbkörper (3) versehen ist, und eines zweiten äußeren Umfangsgewindeabschnitts (10b), der in dem zweiten Ventilhalbkörper (5) versehen ist, zu bilden, wobei die Abschnitte (10a und 10b) wechselseitig in Eingriff stehen.

9. Adapter für Verbinder von hydraulischen Hochdruckschaltungen (1) nach einem oder mehreren der vorhergehenden Ansprüche, **dadurch gekennzeichnet, dass** die Hydraulikabdichtung zwischen dem ersten Ventilhalbkörper (3) und dem zweiten Ventilhalbkörper (5) durch die elastische Dichtung (9) gewährleistet ist, die in dem Flansch (8) untergebracht ist, der im Sitz (8a) vorgesehen ist.

10. Adapter für Verbinder von hydraulischen Hochdruckschaltungen (1) nach einem oder mehreren der vorhergehenden Ansprüche, **dadurch gekennzeichnet, dass** der erste Ventilhalbkörper (3) außen einen Umfangsgewindeabschnitt (3c) zum Verriegeln, mittels einer Ringmutter mit Gewinde, mit der wechselseitigen Buchse mit einem Verschluss vom Typ B, der auf der Hydraulikschaltung vorhanden ist.

11. Adapter für Verbinder von hydraulischen Hochdruckschaltungen (1) nach einem oder mehreren der vorhergehenden Ansprüche, **dadurch gekennzeichnet, dass** der zweite Ventilhalbkörper (5) außen eine Ringmutter (5c) aufweist, die innen eine umlaufende Umfangsrille (5d) aufweist, wobei Kugeln (5e) untergebracht sind.

## Revendications

1. Adaptateur pour connecteurs d'un circuit hydraulique sous haute pression (1) comprenant des premiers moyens de connexion (4) et des deuxièmes moyens de connexion (6) configurés pour être couplés aux connecteurs respectifs mâles et/ou femelles installés dans ledit circuit hydraulique sous haute pression, un corps creux longitudinal (2) qui a un premier demi-corps de vanne creux (3) pour supporter lesdits premiers moyens de connexion (4) et un deuxième demi-corps de vanne creux (5) supportant lesdits deuxièmes moyens de connexion (6), ledit adaptateur (1) comprenant une bride (8), fixée à l'intérieur du deuxième demi-corps de vanne creux, un élément de connexion (7) partagé par lesdits premiers moyens de connexion (4) et lesdits deuxièmes moyens de connexion (6) qui est supporté de façon coaxiale par ladite bride (8) à l'intérieur dudit corps creux longitudinal, des moyens d'étanchéité hydraulique (9) prévus sur ladite bride (8) entre ladite bride et ledit premier demi-corps de vanne (3), ledit premier demi-corps de vanne (3) et ledit deuxième demi-corps de vanne (5) ayant des systèmes de fixation réciproques pour la configuration rigide dudit corps creux longitudinal (2) .

2. Adaptateur pour connecteurs de circuits hydrauliques sous haute pression (1) selon l'une des revendications précédentes, **caractérisé en ce que** ledit élément de connexion coaxial (7) comprend une partie centrale (7a) ayant un filetage (7b) engagé avec un contre-filetage (7c) présent dans ladite bride (8).

3. Adaptateur pour connecteurs de circuits hydrauliques sous haute pression (1) selon l'une des revendications précédentes, **caractérisé en ce que** ledit élément de connexion coaxial (7) comprend une première (7d) et une deuxième (7e) partie s'étendant, respectivement, de côtés axialement opposés par rapport à ladite partie centrale (7a), ladite première (7d) et ladite deuxième (7e) parties s'engageant respectivement avec ledit premier moyen de connexion (4) et ledit deuxième moyen de connexion (6).

4. Adaptateur pour connecteurs de circuits hydrauliques sous haute pression (1) selon l'une ou plusieurs des revendications précédentes, **caractérisé en ce que** ledit premier moyen de connexion coaxiaux (4) comprend un obturateur de type A ou B d'un connecteur mâle ou femelle, sa face d'accouplement externe étant respectivement d'une forme de cône tronqué ou plate.

5. Adaptateur pour connecteurs de circuits hydrauliques sous haute pression (1) selon l'une ou plusieurs des revendications précédentes, **caractérisé en ce que** ledit premier moyen de connexion (4) est connecté à un connecteur femelle avec un obturateur de type A ou B, respectivement, et ledit deuxième moyen de connexion (6) est connecté à un connecteur mâle avec un obturateur de type B ou A, respectivement.

6. Adaptateur pour connecteurs de circuits hydrauliques sous haute pression (1) selon l'une ou plusieurs des revendications précédentes, **caractérisé en ce que** lesdites parties (7d) et (7e) comprennent, respectivement, des ressorts de contraste hélicoïdaux, qui sont, à leur tour, contrastés dans des parties creuses (4c) et (6c) à l'intérieur des moyens de connexion respectifs (4) et (6).

7. Adaptateur pour connecteurs de circuits hydrauliques sous haute pression (1) selon l'une ou plusieurs des revendications précédentes, **caractérisé en ce que** l'étanchéité du fluide hydraulique dans la phase de fermeture dudit moyen de connexion (4) est assurée par un joint élastique (11, 12) placé dans un logement (3b, 5b) prévu dans ledit premier et deuxième demi-corps de vanne (3, 5) .

8. Adaptateur pour connecteurs de circuits hydrauliques sous haute pression (1) selon l'une ou plusieurs des revendications précédentes, **caractérisé en ce que** ledit premier demi-corps de vanne (3) et ledit deuxième demi-corps de vanne (5) sont connectés de manière rigide de sorte qu'ils constituent ledit corps creux longitudinal (2) à travers une première partie filetée circonférentielle interne (10a) prévue dans ledit premier demi-corps de vanne (3) et une deuxième partie filetée circonférentielle externe (10b) prévue dans ledit deuxième demi-corps de vanne (5), lesdites parties (10a and 10b) étant engagées réciproquement.

9. Adaptateur pour connecteurs de circuits hydrauliques sous haute pression (1) selon l'une ou plusieurs des revendications précédentes, **caractérisé en ce que** l'étanchéité hydraulique entre ledit premier demi-corps de vanne (3) et ledit deuxième demi-corps de vanne (5) est assurée par le joint élastique (9) placé dans un logement (8a) prévu dans ladite bride (8).

10. Adaptateur pour connecteurs de circuits hydrauliques sous haute pression (1) selon l'une ou plusieurs des revendications précédentes, **caractérisé en ce que** ledit premier demi-corps de vanne (3) a extérieurement une partie filetée circonférentielle (3c) pour le blocage, à l'aide d'une bague filetée, avec le connecteur femelle réciproque avec un obturateur de type B présent dans le circuit hydraulique existant.

11. Adaptateur pour connecteurs de circuits hydrauliques sous haute pression (1) selon l'une ou plusieurs des revendications précédentes, **caractérisé en ce que** ledit deuxième demi-corps de vanne (5) a extérieurement une bague (5c) qui a intérieurement une rainure circonférentielle périmétrique (5d), dans laquelle des billes (5e) sont placées.
